# EUROPEAN PATENT SPECIFICATION

(11) **EP 2 314 865 B1**
(45) Date of publication and mention of the grant of the patent: **21.01.2015**
(21) Application number: 09754011.6
(22) Date of filing: 28.05.2009
(51) Int. Cl.: F03D 1/00, F03D 11/00

(54) **WIND GENERATOR COMPRISING AN IMPROVED HOUSING**
WINDGENERATOR MIT EINEM VERBESSERTEN GEHÄUSE
ÉOLIENNE COMPRENANT UNE COQUE AMÉLIORÉE

(30) Priority: 29.05.2008 ES 200801148 U
(43) Date of publication of application: 27.04.2011
(73) Proprietor: Acciona Windpower S.A., 31621 Sarriguren, Navarra (ES)
(72) Inventor: SOROA SISAMÓN, Enrique, E-31621 SARRIGUREN (Navarra) (ES); SALAVERRI ZAZPE, Mikel Aitor, E-31621 SARRIGUREN (Navarra) (ES); ARRUTI PÉREZ, Agustín, E-31621 SARRIGUREN (Navarra) (ES); NÚÑEZ POLO, Miguel, E-31621 SARRIGUREN (Navarra) (ES)
(74) Representative: Pons Ariño, Angel
(86) International application number: PCT/ES2009/070192
(87) International publication number: WO 2009/144357

(56) References cited:
- EP-A1- 1 291 521
- EP-A2- 1 860 322
- EP-A2- 1 882 854
- WO-A1-97/03288
- DE-A1-102006 001 931
- DE-C1- 10 214 779
- ES-A1- 2 156 706
- ES-T3- 2 244 397
- US-A1- 2007 107 220

## Description

The following invention, as stated in the heading of this specification, relates to a wind generator comprising an improved housing, of the type of wind generator that in the top part of the tower comprises a housing that covers the different components thereof required to convert the kinetic energy of the wind into electrical energy, said housing being secured to the various structural parts of the wind generator, and formed by a part that houses the machine and a movable part, the latter consisting of the cover of the hub and cone, in such a way that the improvements are aimed, on the one hand, at fixing the frame of the machine supporting the various components without using additional structural parts for this purpose and, on the other hand, at forming the part that is movable relative to the hub as three identical portions with tabs for joining them together.

Also, by means of a framework of reinforcements the thickness of the housing is made lighter, while maintaining the required rigidity. Alternatively, a set of nerves provides the housing with the required rigidity.

Additionally, the support for the wind sensors on the top part of the housing is provided with means to be turned from inside the housing, making said sensors accessible from the inside and thereby facilitating maintenance tasks.

### FIELD OF THE INVENTION

The present specification describes a wind generator comprising an improved housing, of the type which is mounted on the top end of the wind generator tower and that houses inside the various components thereof required to convert the kinetic energy of the wind into electrical energy.

### BACKGROUND OF THE INVENTION

Conventionally, the wind generator housing is manufactured by fixing a number of plates to a support structure and subsequently anchoring the assembly formed thereby to the frame of the machine. This is a manual job that requires a considerable investment in labour to complete the entire process of producing, adjusting and mounting the housing components. Thus, for example patent application EP1101936A2 (paragraph [002]) describes a method for manufacturing the cover of a wind generator by means of incorporating fibre glass with a metallic structure that is secured to the frames of the machine.

On a separate note, in other fields of the art, the use of the resin infusion technique is well-known, which allows the manufacture in a single piece of components made of compound material with complex geometric shapes.

Document WO97/03288A1 discloses a wind generator comprising an improved housing according to the preamble of claim 1.

### DESCRIPTION OF THE INVENTION

The present specification describes a wind generator comprising an improved housing, of the type which houses the various wind generator components required to convert the kinetic energy of the wind into electrical energy, being mounted on the top end of the wind generator tower, said housing being secured to the various structural parts of the wind generator, in such a way that the housing is formed by, at least, two parts or pieces, one bottom and one top, obtained by means of a resin infusion process.

The bottom part of the housing is fitted with fastening elements which are fixed to the frame or frames of the machine. In this way, the assembly process and required labour is simplified, given that, after demoulding the piece is ready for assembly since it does not require an additional structure for its support nor a subsequent process of adjustment.

The bottom part of the housing incorporates inclusions through which the frame or frames are secured, by securing to the inclusions the fastening elements that are fixed to the frame or frames of the machine.

In a preferred embodiment the fastening elements rest on the frame or frames with the intervention of elastic means. This prevents the vibrations of the frame being transmitted to the housing.

In a preferred embodiment, the fastening elements are fixed to two adjoining inclusions in such a way that said fastening elements rest on the frame at a point situated between the aforementioned inclusions and with the intervention of the elastic elements.

In a preferred embodiment, the inclusions of the bottom part of the housing present the shape resulting from the intersection of the bottom housing with a substantially prismatic volume.

In a first alternative of the invention, the housing of the wind generator incorporates a framework of additional reinforcement elements. Said framework can be assembled in a separate process from that of the housing manufacture and subsequently fixed thereto. This provides the housing with sufficient rigidity and allows its thickness to be reduced, with the ensuing savings in weight and cost.

Said framework consists of a series of ribs that are adapted to the shape of the housing, joined by at least one spar.

Also said framework of additional reinforcement elements may support other accessory elements such as, for example, the floors arranged inside the housing.

In a second alternative of the invention, the reinforcement of the housing is carried out by incorporating into several of the parts composing the housing, at least one reinforcement nerve. The nerves are defined by the fibre laminates comprising the housing.

In a preferred embodiment, the nerves of each part composing the housing coincide with the adjacent part or parts, forming at least one closed line.

In a preferred embodiment, each closed line formed by the nerves is contained, approximately, in a vertical plane.

In a preferred embodiment the plane or planes that, approximately, contain each closed line are substantially perpendicular to the vertical projection of the rotational axis of the wind generator rotor over a horizontal plane.

On a separate note, the movable housing of the hub is made up of three identical parts provided with tabs for joining them together. Said division into three parts facilitates their transport and handling during assembly.

In the aforementioned housing of the hub said three parts are secured to two rings that are secured in turn to the hub. Over the inner surface of the housing of the hub, composite material supports are fixed to which said rings are secured.

In another aspect of the invention, the top part of the housing which houses the machine comprises a support for the wind sensors and means for being able to rotate said support from inside the housing, facilitating the maintenance of said sensors from the inside of the housing through an opening made in the housing itself.

In order to enhance the description below, and with a view to contributing to a better understanding of the characteristics of the invention, this specification is accompanied by a set of drawings, whose figures, in an illustrative and non-limitative manner, represent the most characteristic details of the invention.

### BRIEF DESCRIPTION OF THE DRAWINGS

Figure 1 shows a side elevational view of the different structural parts of a wind generator machine.
Figure 2 shows a side elevational view of the housing which houses the machine, made up of two halves, and of the movable housing of the hub, of a wind generator.
Figure 3 shows a perspective view of the movable housing of the hub, showing how it materialises in three identical parts.
Figure 4 shows a close-up, according to the A-A cut of Figure 2, of the tab between the top and bottom part of the housing which houses the machine.
Figure 5 shows a close-up view, according to the D-D cut of Figure 3, of the way of joining the three parts comprising the movable housing of the hub through several small tabs.
Figure 6 shows two close-ups, according to cuts C-C and B-B of Figure 2, of the joint between the housing which houses the machine and the movable housing of the hub.
Figure 7 shows a close-up perspective view of several inclusions that will materialise in the bottom half of the housing which houses the wind generator machine.

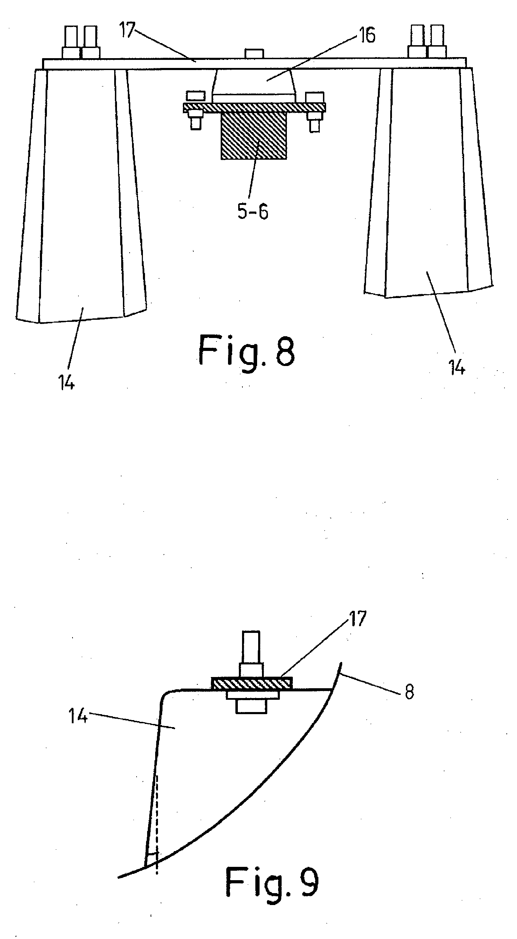

Figure 8 shows a close-up front elevational view of the fastening of the housing to the frame of the machine by means of the inclusions and through an elastic element.
Figure 9 shows a close-up side elevational view of the fastening of the housing to the frame of the machine by means of the inclusions.
Figure 10 shows a framework of reinforcement elements.
Figure 11 shows part of the bottom housing which incorporates a framework with reinforcement elements that support the floor of the inside of the housing.
Figure 12 shows an alternative embodiment, wherein transversal nerves are provided to the parts composing the housing which houses the machine in order to make the assembly rigid.

### DESCRIPTION OF A PREFERRED EMBODIMENT

In view of the abovementioned figures and in accordance with the adopted numbering, one can observe how the different components of a wind generator, required to convert the kinetic energy of the wind into electrical energy, are supported by various structural parts such as the hub 1, the rear frame 5 and the front frame 6 which support the different components of the nacelle, covered by a housing consisting of a part which houses said components, and a part that is movable relative to the hub.

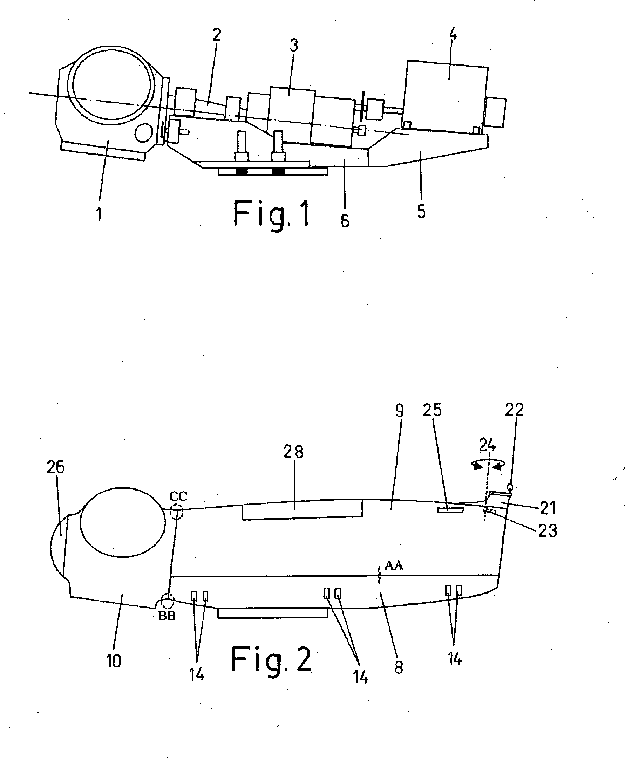

In this way, Figure 1 of the drawings represents various components of the wind generator, such as the hub 1 which supports the blades and which, through a main shaft 2, transmits motion to a gearbox 3. The electrical generator 4 is likewise represented.

At the same time, the improved housing for a wind generator that is the object of the present invention is formed in such a way that the part which houses the components of the machine is defined by two parts, a bottom part 8 and another top part 9, obtained by means of a resin infusion process.

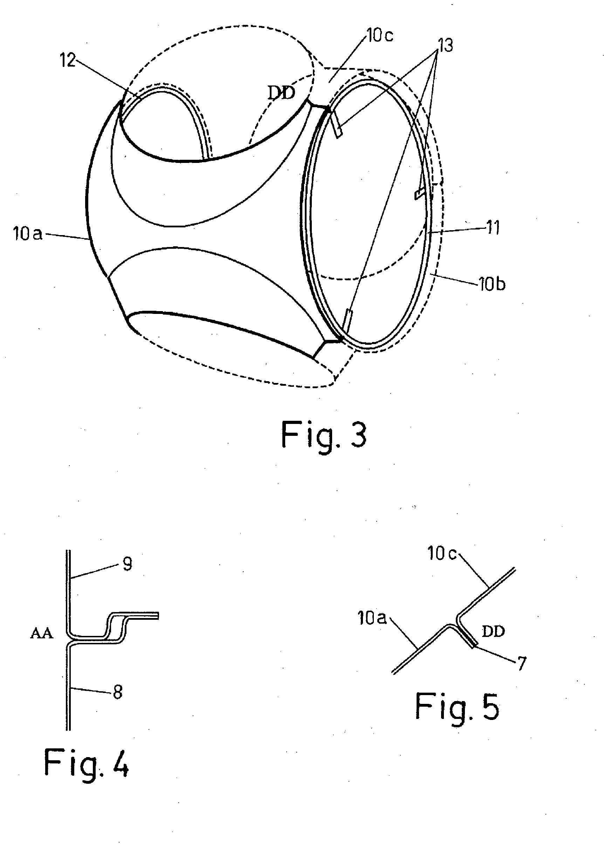

Figure 4 shows a close-up (AA) of the joint between the top part 9 and bottom part 8 of the housing which houses the machine.

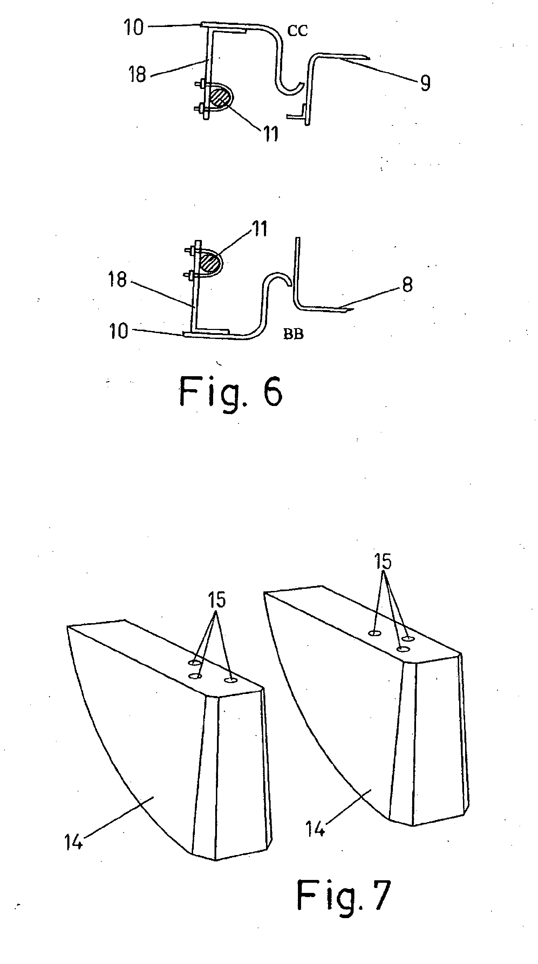

Meanwhile Figure 6 shows a close-up (CC) of the top part of the joint between the housing which houses the machine and the housing of the hub 10 and another close-up (BB) of the bottom part.

Figure 3 shows that the movable part of the hub 10 is defined by three identical parts 10a, 10b, and 10c provided with tabs 7 for joining them together. Said parts are secured to two rings 11 and 12 which are in turn secured to the hub by means of supports 13. Figure 5 shows a close-up of said tabs 7.

The bottom half 8 of the housing of the wind generator machine incorporates inclusions 14, which, as can be seen from Figure 7, present a shape resulting from the intersection of the housing with a substantially prismatic volume. The vertical walls of said inclusions have a slight inclination with a view to facilitating their demoulding.

Likewise, the aforesaid inclusions 14 of the bottom half 8 of the housing of the machine present markers 15 defined in the moulding itself, wherein, following demoulding of the part, holes are made for the securing thereof.

At the same time, the fastening between the inclusions 14 of the housing and the front frame 6 or rear frame 5 is carried out with the intervention of elastic elements 16. For this purpose a fastening element 17 is fixed to two adjacent inclusions, said element resting on the frame at a point between said inclusions and with the intervention of the aforesaid elastic means.

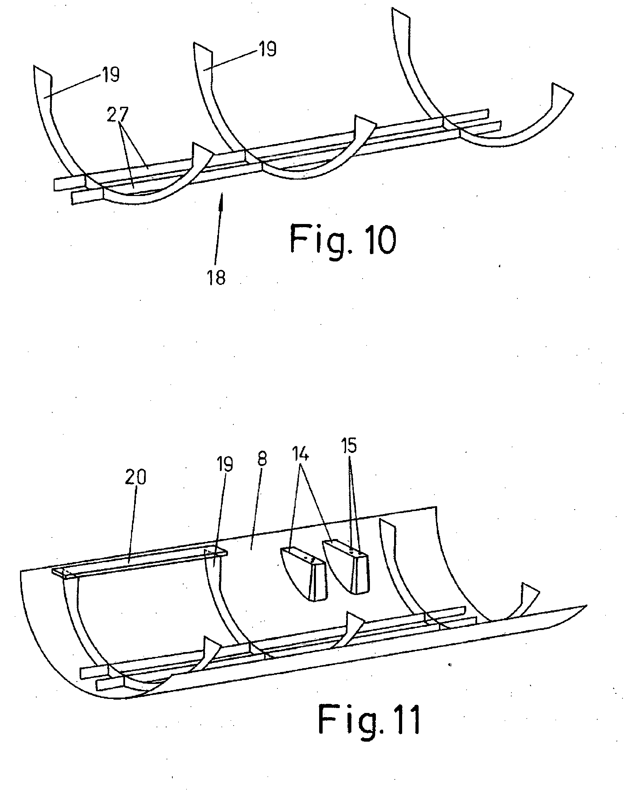

Likewise, as shown in Figures 10 and 11, the housing 8 of the wind generator may incorporate a framework of additional reinforcement elements 18, said framework consisting of a series of ribs 19 that adapt to the shape of the housing 8 joined by spars 27. Said framework, according to a preferred embodiment, is mounted separately from the housing, subsequently joined to it and providing it with greater rigidity, in addition to being used to support other accessory elements such as the floors 20 arranged inside the housing.

Figure 2 additionally shows that the top part 9 of the machine housing incorporates a support 21 for the wind sensors 22 and means 23 to rotate said support 21, in relation to the shaft 24, from the inside of the housing. In this way, said sensors 22 are accessible from inside the housing through an opening 25 made in the housing 9.

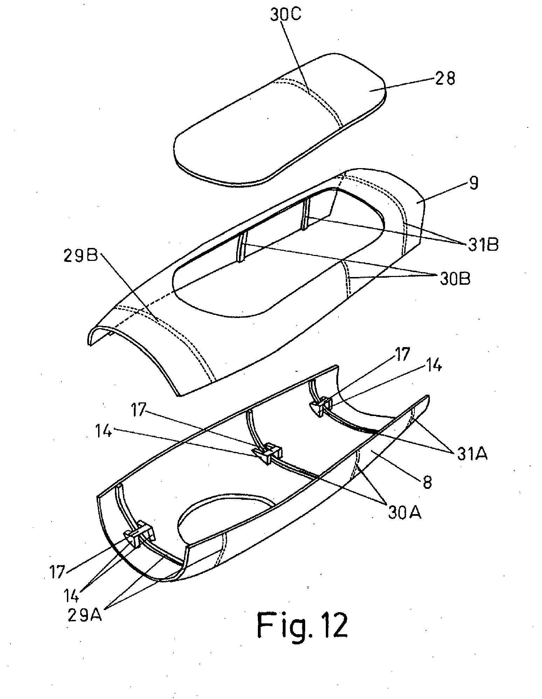

Figure 12 shows an alternative embodiment of the invention. The machine housing in this embodiment is composed of three parts: 8, 9 and 28. Said parts have been fitted with reinforcement ribs which in a preferred embodiment run transversally to the housing.

The axis of rotation of the wind generator rotor approximates, but does not usually coincide with a horizontal line. The longitudinal direction in each part of the housing is parallel to, once the machine is assembled, the horizontal line obtained as the vertical projection of the axis of rotation of the machine over a horizontal plane. A transversal sense of directions is understood, once the machine is assembled, as meaning those contained in planes that are substantially perpendicular to the longitudinal direction of the machine.

In a preferred embodiment, the bottom part 8 of the housing has been provided with three ribs 29A, 30A and 31 A, and the top part 9 has been provided with another three ribs 29B, 30B and 31 B, and part 28 has been provided with one rib 30C.

The ends of the ribs of each part of the housing, once the housing is assembled, coincide with the ends of the ribs of the adjacent parts, in such a way that closed lines are formed. Thus, for example, the ends of rib 30A coincide with those of rib 30B and these in turn with those of rib 30C. The three ribs (30A, 30B, and 30C), therefore, once the housing is assembled, form a closed line that provides the assembly with rigidity. In a similar way, closed lines are formed of ribs 29A, 29B and 31 A, 31 B.

The securing to the frames of the machine in this preferred embodiment is also achieved by means of inclusions 14, to which fastening elements 17 are fixed. The inclusions are defined by the fibreglass laminates of which the housing parts or pieces are made.

The ribs of the different parts are defined by the fibre laminates of which the parts or pieces are made. The different parts or pieces 8, 9 and 28 are provided with ribs and inclusions directly in the manufacturing process by infusion, and therefore no subsequent processing of the aforesaid parts or pieces is necessary, as they are ready for assembly on the machine.

The resulting housing is self-supporting. Thanks to the ribs 29A and 29B, 30A, 30B and 30C, and 31 A and 31 B, the pieces composing the housing have thin walls but possess sufficient stiffness to be secured by means of the inclusions 14 to the frames 5 and 6 without requiring the use of a support structure for the housing. The stiffness provided by the aforesaid ribs makes it possible to use less material in the walls and the different pieces of the housing, with the ensuing savings in cost and weight.

In a preferred embodiment, as shown in Figure 12, the ribs in the bottom part of the housing run between the adjacent inclusions.

Figure 12 represents the ribs on the internal face of the housing, but in an equivalent manner, the ribs could run along the external face of the housing or along both faces.

## Claims

1. WIND GENERATOR COMPRISING AN IMPROVED HOUSING that covers the various components thereof required to convert the kinetic energy of the wind into electrical energy and is mounted on the top end of the wind generator tower, said housing being secured to the various structural parts (1,5, 6) of the wind generator and comprising at least two parts, a bottom part (8) and a top part (9), wherein fastening elements (17) are fixed to the bottom part (8) of the housing which are fixed to the frame or frames (5, 6) of the machine, not using additional structural elements for securing the housing to the frame or frames (5, 6), **characterised in that** the parts (8, 9) composing the housing have been obtained by means of a resin infusion process, and **in that** the fastening elements (17) which are fixed to the frame or frames (5, 6) of the machine, are fixed to inclusions (14) materialised in the bottom part (8) of the housing.

2. WIND GENERATOR COMPRISING AN IMPROVED HOUSING according to claim 1, **characterised in that** the fastening elements (17) rest on the frame or frames (5, 6) with the intervention of elastic means (16).

3. WIND GENERATOR COMPRISING AN IMPROVED HOUSING according to claim 2, **characterised in that** the fastening elements (17) are fixed to two adjoining inclusions (14) and rest on the frame or frames (5, 6) of the machine at a point situated between the two adjoining inclusions (14).

4. WIND GENERATOR COMPRISING AN IMPROVED HOUSING according to claim 3, **characterised in that** the inclusions (14) of the housing present the shape resulting from the intersection with a substantially prismatic volume.

5. WIND GENERATOR COMPRISING AN IMPROVED HOUSING according to any of claims 1 to 4, **characterised in that** at least one of the parts (8, 9), composing the wind generator housing incorporates a framework (18) of additional reinforcement elements.

6. WIND GENERATOR COMPRISING AN IMPROVED HOUSING according to claim 5, **characterised in that** the framework (18) consists of a series of ribs (19) which adapt to the shape of the housing joined by, at least, one crossbar (27).

7. WIND GENERATOR COMPRISING AN IMPROVED HOUSING according to claim 6, **characterised in that** the framework (18) is arranged in the bottom part (8) of the housing.

8. WIND GENERATOR COMPRISING AN IMPROVED HOUSING according to claim 7, **characterised in that** the framework (18) supports accessory elements of the inside of the housing.

9. WIND GENERATOR COMPRISING AN IMPROVED HOUSING according to any of claims 1 to 4, **characterised in that** several of the parts (8, 9, 28) composing the housing that houses the wind generator machine incorporate at least one reinforcement rib (29A, 29B), (30A, 30B, 30C), (31, 31 B).

10. WIND GENERATOR COMPRISING AN IMPROVED HOUSING according to claim 9, **characterised in that** the parts (8, 9, 28) composing the housing that houses the machine comprise fibre laminates and **in that** the ribs are defined by the fibre laminates.

11. WIND GENERATOR COMPRISING AN IMPROVED HOUSING according to claim 10, **characterised in that** certain ends of the rib or ribs (30A, 30B, 30C) of each part composing the housing (8, 9, 28) coincide with those of the adjacent part or parts, forming at least one closed line (29, 30, 31).

12. WIND GENERATOR COMPRISING AN IMPROVED HOUSING according to claim 11, **characterised in that** each closed line (29A, 29B), (30A, 30B, 30C) and (31 A, 31 B) formed by the ribs is contained approximately in a vertical plane.

13. WIND GENERATOR COMPRISING AN IMPROVED HOUSING according to claim 12, **characterised in that** the plane or planes that approximately contain each closed line (29A, 29B), (30A, 30B, 30C) and (31 A and 31 B) are substantially perpendicular to the vertical projection of the axis of rotation of the wind generator rotor over a horizontal plane.

14. WIND GENERATOR COMPRISING AN IMPROVED HOUSING according to claim 1, **characterised in that** further comprises a movable housing (10) that covers a bushing (1), wherein the movable housing (10) comprises three identical parts (10a, 10b and 10c) provided with tabs (7) for joining them together.

15. WIND GENERATOR COMPRISING AN IMPROVED HOUSING according to claim 14, **characterised in that** the three parts (10a, 10b, 10c) comprised in the movable housing (10) are fixed on two rings (11 and 12) which in turn are fixed to the bushing (1).

16. WIND GENERATOR COMPRISING AN IMPROVED HOUSING according to claim 1, **characterised in that** the top part (9) of the housing that houses the machine comprises a support (21) for wind sensors (22) and means (23) to be able to rotate said support (21) according to a shaft (24) from the inside of the housing, in such a way that by rotating the support the sensors (22) are accessible from inside the gondola, through an opening (25) made in the top part (9) of the housing.

## Patentansprüche

1. WINDGENERATOR MIT EINEM VERBESSERTEN GEHÄUSE, das die verschiedenen Komponenten des Windgenerators abdeckt, die erforderlich sind, um die kinetische Energie des Windes in elektrische Energie zu verwandeln, und das auf dem oberen Ende des Windgeneratorturms montiert ist, wobei dieses Gehäuse an den verschiedenen strukturellen Teilen (1, 5, 6) des Windgenerators gesichert ist und mindestens zwei Teile umfasst, einen unteren Teil (8) und einen oberen Teil (9), wobei Befestigungselemente (17) am unteren Teil (8) des Gehäuses fixiert sind, die am Rahmen oder an den Rahmen (5, 6) der Maschine fixiert sind, wobei keine zusätzlichen strukturellen Elemente zur Sicherung des Gehäuses am Rahmen oder an den Rahmen (5, 6) verwendet werden, **dadurch gekennzeichnet, dass** die das Gehäuse bildenden Teile (8, 9) mittels eines Harzinfusionsverfahrens erhalten wurden und dass die an dem Rahmen oder den Rahmen (5, 6) der Maschine fixierten Befestigungselemente (17) an Einfügungen (14) fixiert sind, die im unteren Teil (8) des Gehäuses ausgeführt sind.

2. WINDGENERATOR MIT EINEM VERBESSERTEN GEHÄUSE nach Anspruch 1, **dadurch gekennzeichnet, dass** die Befestigungselemente (17) mit der Intervention von elastischen Mitteln (16) auf dem Rahmen oder den Rahmen (5, 6) ruhen.

3. WINDGENERATOR MIT EINEM VERBESSERTEN GEHÄUSE nach Anspruch 2, **dadurch gekennzeichnet, dass** die Befestigungselemente (17) an zwei angrenzenden Einfügungen (14) fixiert sind und an einem Punkt zwischen den beiden angrenzenden Einfügungen (14) auf dem Rahmen oder den Rahmen (5, 6) der Maschine ruhen.

4. WINDGENERATOR MIT EINEM VERBESSERTEN GEHÄUSE nach Anspruch 3, **dadurch gekennzeichnet, dass** die Einfügungen (14) des Gehäuses eine Form aufweisen, die aus der Überschneidung mit einem im Wesentlichen prismenförmigen Volumen resultiert.

5. WINDGENERATOR MIT EINEM VERBESSERTEN GEHÄUSE nach irgendeinem der Ansprüche 1 bis 4, **dadurch gekennzeichnet, dass** mindestens einer der das Windgeneratorgehäuse bildenden Teile (8, 9) eine Rahmenkonstruktion (18) aus zusätzlichen Verstärkungselementen einschließt.

6. WINDGENERATOR MIT EINEM VERBESSERTEN GEHÄUSE nach Anspruch 5, **dadurch gekennzeichnet, dass** die Rahmenkonstruktion (18) aus einer Reihe von Rippen (19) besteht, die sich an die Form des Gehäuses anpassen, das durch mindestens eine Querstange (27) verbunden ist.

7. WINDGENERATOR MIT EINEM VERBESSERTEN GEHÄUSE nach Anspruch 6, **dadurch gekennzeichnet, dass** die Rahmenkonstruktion (18) im unteren Teil (8) des Gehäuses angeordnet ist.

8. WINDGENERATOR MIT EINEM VERBESSERTEN GEHÄUSE nach Anspruch 7, **dadurch gekennzeichnet, dass** die Rahmenkonstruktion (18) Zusatzelemente des Gehäuseinneren stützt.

9. WINDGENERATOR MIT EINEM VERBESSERTEN GEHÄUSE nach irgendeinem der Ansprüche 1 bis 4, **dadurch gekennzeichnet, dass** mehrere der Teile (8, 9, 28), die das Gehäuse bilden, in dem die Windgeneratormaschine untergebracht ist, mindestens eine Verstärkungsrippe (29A, 29B), (30A, 30B, 30C), (31, 31 B) einschließen.

10. WINDGENERATOR MIT EINEM VERBESSERTEN GEHÄUSE nach Anspruch 9, **dadurch gekennzeichnet, dass** die Teile (8, 9, 28), die das Gehäuse bilden, in dem die Maschine untergebracht ist, Glasfaserlaminate umfassen und dass die Rippen von den Glasfaserlaminaten definiert werden.

11. WINDGENERATOR MIT EINEM VERBESSERTEN GEHÄUSE nach Anspruch 10, **dadurch gekennzeichnet, dass** bestimmte Enden der Rippen (30A, 30B, 30C) jedes der Teile (8, 9, 28), die das Gehäuse bilden, mit denen des angrenzenden Teils oder der angrenzenden Teile übereinstimmen und mindestens eine geschlossene Linie (29, 30, 31) bilden.

12. WINDGENERATOR MIT EINEM VERBESSERTEN GEHÄUSE nach Anspruch 11, **dadurch gekennzeichnet, dass** jede von den Rippen gebildete geschlossene Linie (29A, 29B), (30A, 30B, 30C) und (31A, 31 B) ungefähr in einer vertikalen Ebene enthalten ist.

13. WINDGENERATOR MIT EINEM VERBESSERTEN GEHÄUSE nach Anspruch 12, **dadurch gekennzeichnet, dass** die Ebene oder Ebenen, die ungefähr jede geschlossene Linie (29A, 29B), (30A, 30B, 30C) und (31A, 31 B) enthalten, im Wesentlichen senkrecht zur vertikalen Projektion der Rotationsachse des Windgeneratorrotors über einer horizontalen Ebene sind.

14. WINDGENERATOR MIT EINEM VERBESSERTEN GEHÄUSE nach Anspruch 1, **dadurch gekennzeichnet, dass** außerdem ein bewegliches Gehäuse (10) enthalten ist, das eine Buchse (1) abdeckt, wobei das bewegliche Gehäuse (10) drei identische Teile (10a, 10b und 10c) umfasst, die mit Laschen (7) zur Verbindung derselben miteinander ausgestattet ist.

15. WINDGENERATOR MIT EINEM VERBESSERTEN GEHÄUSE nach Anspruch 14, **dadurch gekennzeichnet, dass** die drei in dem beweglichen Gehäuse (19) enthaltenen Teile (10a, 10b, 10c) an zwei Ringen (11 und 12) fixiert sind, die seinerseits an der Buchse (1) fixiert sind.

16. WINDGENERATOR MIT EINEM VERBESSERTEN GEHÄUSE nach Anspruch 1, **dadurch gekennzeichnet, dass** der obere Teil (9) des Gehäuses, in dem die Maschine untergebracht ist, einen Träger (21) für Windsensoren (22) und Mittel (23) umfasst, um diesen Träger (21) entsprechend einer Welle (24) aus dem Gehäuseinneren zu rotieren, sodass durch die Rotation des Trägers die Sensoren (22) aus dem Inneren der Gondel durch eine Öffnung (25) im oberen Teil (9) des Gehäuses erreicht werden können.

## Revendications

1. ÉOLIENNE COMPRENANT UNE ENVELOPPE AMÉLIORÉE qui recouvre les divers composants de l'éolienne nécessaires pour transformer l'énergie cinétique du vent en énergie électrique et qui est montée sur l'extrémité supérieure de la tour de l'éolienne, ladite enveloppe étant amarrée aux diverses parties de la structure (1, 5, 6) de l'éolienne et comprenant au moins deux parties, une partie inférieure (8) et une partie supérieure (9), où des éléments de fixation (17) sont fixés à la partie inférieure (8) de l'enveloppe qui sont fixés au châssis ou aux châssis (5, 6) de la machine, sans utiliser d'éléments structuraux supplémentaires pour amarrer l'enveloppe au châssis ou aux châssis (5, 6), **caractérisée en ce que** les parties (8, 9) composant l'enveloppe ont été obtenues au moyen d'un procédé d'infusion de résine, et **en ce que** les éléments de fixation (17) qui sont fixés au châssis ou aux châssis (5, 6) de la machine, sont fixés à des inclusions (14) apparaissant dans la partie inférieure (8) de l'enveloppe.

2. ÉOLIENNE COMPRENANT UNE ENVELOPPE AMÉLIORÉE selon la revendication 1, **caractérisée en ce que** les éléments de fixation (17) reposent sur le châssis ou les châssis (5, 6) avec l'intervention de moyens élastiques (16).

3. ÉOLIENNE COMPRENANT UNE ENVELOPPE AMÉLIORÉE selon la revendication 2, **caractérisée en ce que** les éléments de fixation (17) sont fixées à deux inclusions adjacentes (14) et reposent sur le châssis ou les châssis (5, 6) de la machine en un point situé entre les deux inclusions adjacentes (14).

4. ÉOLIENNE COMPRENANT UNE ENVELOPPE AMÉLIORÉE selon la revendication 3, **caractérisée en ce que** les inclusions (14) de l'enveloppe présentent la forme résultant de l'intersection avec un volume substantiellement prismatique.

5. ÉOLIENNE COMPRENANT UNE ENVELOPPE AMÉLIORÉE selon n'importe laquelle des revendications 1 à 4, **caractérisée en ce qu'**au moins l'une des parties (8, 9) composant l'enveloppe de l'éolienne comporte une ossature (18) d'éléments de renfort supplémentaires.

6. ÉOLIENNE COMPRENANT UNE ENVELOPPE AMÉLIORÉE selon la revendication 5, **caractérisée en ce que** l'ossature (18) est constituée d'une série de nervures (19) qui s'adaptent à la forme de l'enveloppe reliée par, au moins, une barre transversale (27).

7. ÉOLIENNE COMPRENANT UNE ENVELOPPE AMÉLIORÉE selon la revendication 6, **caractérisée en ce que** l'ossature (18) est disposée dans la partie inférieure (8) de l'enveloppe.

8. ÉOLIENNE COMPRENANT UNE ENVELOPPE AMÉLIORÉE selon la revendication 7, **caractérisée en ce que** l'ossature (18) soutient des éléments accessoires de l'intérieur de l'enveloppe.

9. ÉOLIENNE COMPRENANT UNE ENVELOPPE AMÉLIORÉE selon n'importe laquelle des revendications 1 à 4, **caractérisée en ce que** plusieurs des parties (8, 9, 28) composant l'enveloppe qui héberge la machine de l'éolienne comprennent au moins une nervure de renfort (29A, 29B), (30A, 30B, 30C), (31, 31 B).

10. ÉOLIENNE COMPRENANT UNE ENVELOPPE AMÉLIORÉE selon la revendication 9, **caractérisée en ce que** les parties (8, 9, 28) composant l'enveloppe qui héberge la machine comprennent des panneaux de fibres et **en ce que** les nervures sont définies par les panneaux de fibres.

11. ÉOLIENNE COMPRENANT UNE ENVELOPPE AMÉLIORÉE selon la revendication 10, **caractérisée en ce que** certaines extrémités de la nervure ou des nervures (30A, 30B, 30C) de chaque partie composant l'enveloppe (8, 9, 28) coïncident avec celles de la partie ou des parties adjacentes, formant au moins une ligne fermée (29, 30, 31).

12. ÉOLIENNE COMPRENANT UNE ENVELOPPE AMÉLIORÉE selon la revendication 11, **caractérisée en ce que** chaque ligne fermée (29A, 29B), (30A, 30B, 30C) et (31A, 31 B) formée par les nervures est contenue approximativement dans un plan vertical.

13. ÉOLIENNE COMPRENANT UNE ENVELOPPE AMÉLIORÉE selon la revendication 12, **caractérisée en ce que** le plan ou les plans qui contiennent approximativement chaque ligne fermée (29A, 29B), (30A, 30B, 30C) et (31A, 31 B) sont substantiellement perpendiculaires à la projection verticale de l'axe de rotation du rotor de l'éolienne sur un plan horizontal.

14. ÉOLIENNE COMPRENANT UNE ENVELOPPE AMÉLIORÉE selon la revendication 1, **caractérisée en ce qu'**elle comprend en outre une enveloppe mobile (10) qui recouvre une bague (1), dans laquelle l'enveloppe mobile (10) comprend trois parties identiques (10a, 10b et 10c) munies de pattes (7) pour les assembler ensemble.

15. ÉOLIENNE COMPRENANT UNE ENVELOPPE AMÉLIORÉE selon la revendication 14, **caractérisée en ce que** les trois parties (10a, 10b 10c) comprises dans l'enveloppe mobile (10) sont fixées sur deux anneaux (11 et 12) qui sont fixés à leur tour à la bague (1).

16. ÉOLIENNE COMPRENANT UNE ENVELOPPE AMÉLIORÉE selon la revendication 1, **caractérisée en ce que** la partie supérieure (9) de l'enveloppe qui héberge la machine comprend un support (21) pour des capteurs de vent (22) et des moyens (23) pour pouvoir faire tourner ledit support (21) selon un axe (24) depuis l'intérieur de l'enveloppe, de telle façon qu'en faisant tourner le support les capteurs (22) sont accessibles depuis l'intérieur de la nacelle, à travers une ouverture (25) réalisée dans la partie supérieure (9) de l'enveloppe.
